# FASCICULE DE BREVET EUROPEEN

(11) **EP 4 408 704 B1**
(45) Date de publication et mention de la délivrance du brevet: **06.08.2025**
(21) Numéro de dépôt: 22783533.7
(22) Date de dépôt: 05.09.2022
(51) Int. Cl.: B60Q 3/225, B60Q 3/82, B60R 7/04

(54) **CONSOLE CENTRALE À ORGANE DE COMMANDE À DEUX DÉCLENCHEURS D'ÉCLAIRAGE INTERNE, POUR UN VÉHICULE**
MITTELKONSOLE MIT EINEM BEDIENELEMENT MIT ZWEI INTERNEN BELEUCHTUNGSAUSLÖSERN FÜR EIN FAHRZEUG
CENTER CONSOLE HAVING A CONTROL MEMBER WITH TWO INTERNAL LIGHTING TRIGGERS, FOR A VEHICLE

(30) Priorité: 30.09.2021 FR 2110299
(43) Date de publication de la demande: 07.08.2024
(73) Titulaire: Stellantis Auto SAS, 78300 Poissy (FR)
(72) Inventeur: SAUVAGE, Sebastien, 25200 GRAND CHARMONT (FR)
(74) Mandataire: BCIP
(86) Numéro de dépôt international: PCT/FR2022/051675
(87) Numéro de publication internationale: WO 2023/052702

(56) Documents cités:
- DE-A1- 1 605 897
- DE-A1- 2 442 957
- FR-A1- 2 789 954
- JP-A- 2006 283 415
- JP-A- H07 246 878
- US-A1- 2019 257 123

## Description

### Domaine technique de l'invention

L'invention concerne les véhicules, et plus précisément les consoles centrales qui sont destinées à équiper des véhicules.

### Etat de la technique

Certains véhicules, généralement de type automobile, comprennent, généralement dans un habitacle entre deux sièges droit et gauche, une console centrale comprenant un boîtier dans lequel est défini un espace de rangement associé à un dispositif d'éclairage interne.

Dans certaines de ces consoles centrales l'accès à l'espace de rangement est contrôlé par deux volets mobiles (par exemple droit et gauche) qui constituent éventuellement et respectivement des accoudoirs (droit et gauche) pour les passagers (droit et gauche). Par exemple, ces deux volets mobiles peuvent être montés à rotation sur le boîtier. Chacun de ces volets mobiles a une position fermée (empêchant partiellement l'accès à l'espace de rangement) et une position ouverte (permettant l'accès à l'espace de rangement).

Les documents US2019257123, JPH07246878, JP2006283415, DE2442957, FR2789954 et DE1605897 décrivent différents arts antérieurs.

Actuellement, le dispositif d'éclairage interne de l'espace de rangement a des états éteint et allumé qui sont commandés respectivement par des états ouvert et fermé d'un unique organe de commande qui est associé à l'un des deux volets mobiles, généralement celui qui est voisin du siège conducteur. Ce n'est donc que lorsque le volet mobile voisin du siège conducteur passe de sa position fermée à sa position ouverte que cela provoque le passage de l'organe de commande de son état ouvert à son état fermé. En d'autres termes, lorsque le volet mobile voisin du siège conducteur demeure dans sa position fermée et que le volet mobile voisin du siège passager passe de sa position fermée à sa position ouverte l'organe de commande demeure dans son état ouvert (interdisant l'éclairage interne), ce qui n'est pas apprécié par le passager et potentiellement considéré comme un défaut de conception qui nuit à l'impression de qualité générale.

De plus, lorsque les volets mobiles sont rotatifs, l'organe de commande comprend généralement un pion de commande translatable sur lequel agit une partie du volet mobile voisin du siège conducteur, généralement un peu avant la fin de sa rotation (vers sa position ouverte). Or, cette action provoque une diminution sensible de la vitesse de rotation du volet mobile voisin du siège conducteur, et donc lorsque l'ouverture des deux volets mobiles est simultanée le volet mobile voisin du siège passager parvient dans sa position ouverte avant le volet mobile voisin du siège conducteur ce qui peut être considéré par les passagers comme un dysfonctionnement ou un défaut de conception qui nuit à l'impression de qualité générale.

L'invention a donc notamment pour but d'améliorer la situation.

### Présentation de l'invention

Elle propose notamment à cet effet une console centrale destinée à équiper un véhicule et comprenant un boîtier comportant un espace de rangement à accès contrôlé par deux volets mobiles ayant chacun des positions fermée et ouverte et associé à un dispositif d'éclairage interne ayant des états éteint et allumé commandés respectivement par des états ouvert et fermé d'un organe de commande.

Cette console centrale se caractérise par le fait que son organe de commande comprend deux déclencheurs, associés respectivement aux volets mobiles, et propres chacun à être placés indépendamment dans une première position induisant l'état ouvert ou une deuxième position induisant l'état fermé selon que le volet mobile associé est en position fermée ou ouverte. L'organe de commande comprend une pièce de commande ayant des troisième et quatrième positions provoquant respectivement les états ouvert et fermé. Dans ce cas, chaque déclencheur comprend un élément translatable entre ses première et deuxième positions lors d'un changement de position du volet mobile associé afin de faire passer la pièce de commande de sa troisième position à sa quatrième position, ou inversement. Chacun des éléments agit sur la même pièce de commande.

Ainsi, dès que l'un au moins des deux volets mobiles passe de sa position fermée à sa position ouverte le dispositif d'éclairage interne se met à éclairer l'espace de rangement et donc fonctionne pour les deux passagers, et les deux volets mobiles agissant sur l'organe de commande, ils parviennent simultanément dans leur position ouverte lorsqu'ils sont ouverts simultanément.

La console centrale selon l'invention peut comporter d'autres caractéristiques qui peuvent être prises séparément ou en combinaison, et notamment :
- la pièce de commande peut être dans sa quatrième position lorsque l'un des déclencheurs est dans sa deuxième position, quelle que soit la position de l'autre déclencheur ;
- son organe de commande peut comprendre un pion translatable sur lequel la pièce de commande exerce, dans sa quatrième position, une pression propre à provoquer l'état fermé ;
- en présence de la dernière option, la pièce de commande peut être montée à rotation et propre à exercer la pression lorsqu'elle est entraînée en rotation de sa troisième position vers sa quatrième position par l'un des éléments ;
- également en présence de la dernière option, l'organe de commande peut comprendre un corps comportant les déclencheurs et un bloc de commande comprenant un circuit électronique comportant le pion translatable, ayant les états ouvert et fermé et couplé au dispositif d'éclairage interne ;
- en présence de l'option précédente, chacun des déclencheurs peut être installé dans le corps avec une force de renvoi qui est propre à le pousser automatiquement de sa première position vers sa deuxième position lorsque le volet mobile associé passe de sa position fermée à sa position ouverte ;
- chaque élément peut comprendre une première partie sur laquelle agit le volet mobile associé, et une seconde partie prolongeant cette première partie et propre à agir sur la pièce de commande ;
- chacun des volets mobiles peut être monté à rotation par rapport au boîtier. L'invention propose également un véhicule, éventuellement de type automobile, et comprenant une console centrale du type de celle présentée ci-avant.

### Brève description des figures

D'autres caractéristiques et avantages de l'invention apparaîtront à l'examen de la description détaillée ci-après, et des dessins annexés (obtenus pour les cinq premiers en CAO/DAO (« Conception Assistée par Ordinateur/Dessin Assisté par Ordinateur »)), sur lesquels :
[Fig. 1] illustre schématiquement, dans une vue en perspective du côté droit, un exemple de réalisation d'une console centrale selon l'invention, destinée à équiper un habitacle d'un véhicule,
[Fig. 2] illustre schématiquement, dans une vue de face du côté arrière, la console centrale de la figure 1 avec ses deux volets en position fermée,
[Fig. 3] illustre schématiquement, dans une vue en coupe dans un plan transversal et vertical au niveau de l'organe de commande, la console centrale de la figure 1 avec son volet droit en position fermée et son volet gauche en position ouverte,
[Fig. 4] illustre schématiquement, dans une vue en coupe dans un plan transversal et vertical au niveau de l'organe de commande, la partie supérieure du boîtier de la console centrale de la figure 1 lorsque les deux déclencheurs de l'organe de commande sont dans leur première position (correspondant à des volets en position fermée),
[Fig. 5] illustre schématiquement, dans une vue du dessus, l'exemple d'organe de commande du boîtier de la console centrale de la figure 1,
[Fig. 6] illustre schématiquement et fonctionnellement, dans une vue en coupe dans un plan longitudinal et vertical, une partie droite de l'exemple d'organe de commande du boîtier de la console centrale de la figure 1, lorsque le volet droit est en position fermée, et
[Fig. 7] illustre schématiquement et fonctionnellement, dans une vue en coupe dans un plan longitudinal et vertical, une partie droite de l'exemple d'organe de commande du boîtier de la console centrale de la figure 1, lorsque le volet droit est en position ouverte.

### Description détaillée de l'invention

L'invention a notamment pour but de proposer une console centrale CC, destinée à équiper un véhicule, et comprenant un dispositif d'éclairage interne commandé par un organe de commande OC ayant deux déclencheurs DOj associés respectivement à deux volets Vj.

Dans ce qui suit, on considère, à titre d'exemple non limitatif, que la console centrale CC est destinée à faire partie d'un véhicule automobile, comme par exemple une voiture. Mais l'invention n'est pas limitée à ce type de véhicule. Elle concerne en effet tout véhicule (terrestre, maritime (ou fluvial) ou aérien) pouvant comporter au moins une console centrale.

Par ailleurs, on considère dans ce qui suit, à titre d'exemple non limitatif, que la console centrale CC est destinée à être installée entre des sièges avant droit et gauche (de rang un) d'un habitacle de véhicule automobile. Mais l'invention n'est pas limitée à cette application. Ainsi, la console centrale CC pourrait être installée entre des sièges droit et gauche d'un rang intermédiaire ou arrière d'un habitacle de véhicule, par exemple.

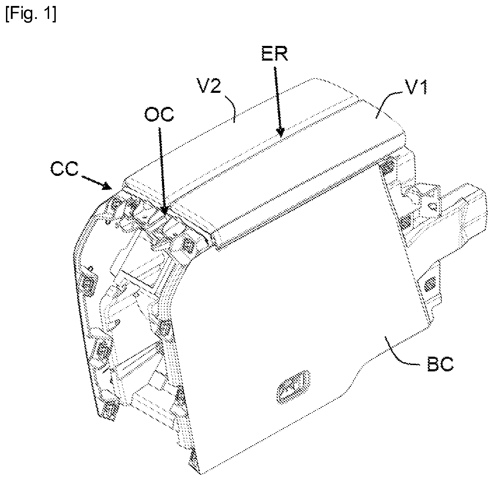

On a schématiquement illustré sur les figures 1 à 3, au moins partiellement, un exemple de réalisation d'une console centrale CC selon l'invention.

Comme illustré sur les figures 1 à 3, une console centrale CC, selon l'invention, comprend au moins un boîtier BC, deux volets mobiles Vj (j = 1 ou 2), un dispositif d'éclairage interne (non illustré), et un organe de commande OC.

Dans ce qui suit et ce qui précède la lettre j associée à la référence alphanumérique d'un élément d'une figure désigne le côté droit (j = 1) ou gauche (j = 2) de cet élément, en référence aux côtés droit et gauche du véhicule, à titre d'exemple illustratif.

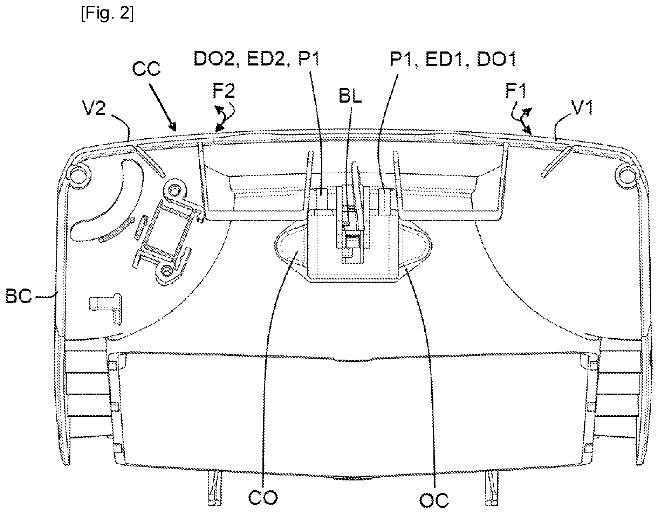

Le boîtier BC comprend un espace de rangement ER dont l'accès est contrôlé par les deux volets mobiles Vj qui ont chacun une position fermée (illustrée sur la figure 1) et une position ouverte (illustrée sur la partie gauche de la figure 2). Par exemple, et comme illustré non limitativement sur les figures 1 à 3, chacun des volets mobiles Vj peut être monté à rotation par rapport au boîtier BC, et les sens de rotation des volets mobiles Vj (flèches F1 et F2) peuvent être opposés entre eux. Mais dans une variante de réalisation les volets mobiles Vj pourraient être translatables.

Egalement par exemple, et comme illustré non limitativement sur les figures 1 à 3, les volets mobiles Vj peuvent constituer respectivement des accoudoirs (ici droit et gauche) pour les passagers (ici avant et droit et gauche).

Le dispositif d'éclairage interne est chargé d'éclairer l'espace de rangement ER lorsque l'un au moins des volets mobiles Vj est dans sa position ouverte. Il a donc un état éteint et un état allumé qui sont commandés respectivement par un état ouvert (ou non passant) et un état fermé (ou passant) de l'organe de commande OC.

L'organe de commande OC comprend deux déclencheurs DOj qui sont associés respectivement aux volets mobiles Vj. En d'autres termes, le déclencheur (ici droit) DO1 (j = 1) est associé au volet mobile (ici droit) V1, et le déclencheur (ici gauche) DO2 (j = 2) est associé au volet mobile (ici gauche) V2.

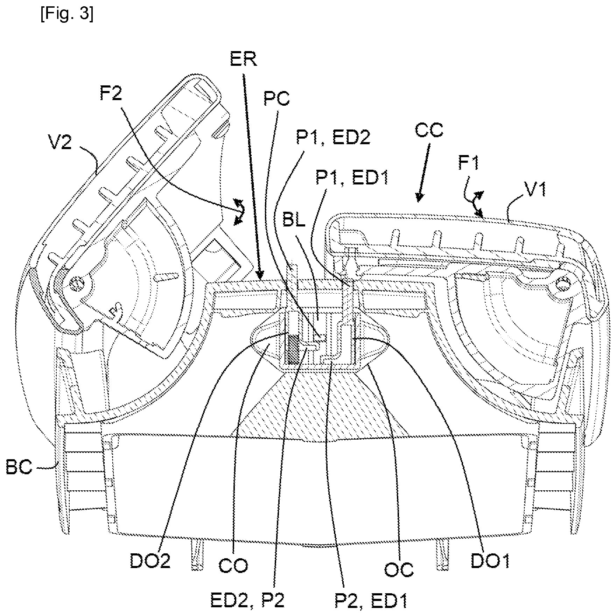

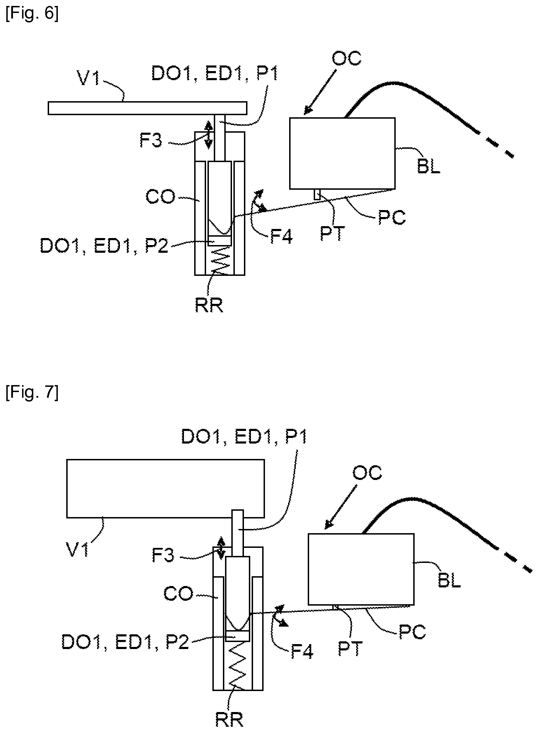

Ces deux déclencheurs DOj sont propres chacun à être placés indépendamment dans une première position (illustrée sur la partie droite de la figure 3 et les figures 4 et 6) qui induit l'état ouvert de son organe de commande OC ou dans une deuxième position (illustrée sur la partie gauche de la figure 3 et la figure 7) qui induit l'état fermé de son organe de commande OC selon que le volet mobile Vj associé est en position fermée ou ouverte. En d'autres termes, lorsque le volet mobile droit V1 passe de sa position fermée à sa position ouverte le déclencheur droit DO1 passe de sa première position (correspondant à l'état ouvert et donc au placement du dispositif d'éclairage interne dans son état éteint) à sa deuxième position (correspondant à l'état fermé et donc au placement du dispositif d'éclairage interne dans son état allumé). De même, lorsque le volet mobile gauche V2 passe de sa position fermée à sa position ouverte le déclencheur gauche DO2 passe de sa première position (correspondant à l'état ouvert et donc au placement du dispositif d'éclairage interne dans son état éteint) à sa deuxième position (correspondant à l'état fermé et donc au placement du dispositif d'éclairage interne dans son état allumé).

Grâce à cet organe de commande OC à deux déclencheurs DOj, dès que l'un au moins des deux volets mobiles Vj passe de sa position fermée à sa position ouverte le dispositif d'éclairage interne se met à éclairer l'espace de rangement ER, et donc cet éclairage est désormais offert au passager droit comme au passager gauche. De plus, les deux volets mobiles Vj agissant sur l'organe de commande OC, lorsqu'ils passent simultanément de leur position fermée à leur position ouverte ils font l'objet d'une même diminution de leur vitesse (ici de rotation) et donc parviennent simultanément dans leur position ouverte. Il n'y a donc plus de dysfonctionnement ou défaut de conception de la console centrale CC nuisant à l'impression de qualité générale.

Par exemple, et comme illustré non limitativement sur les figures 3 à 7, l'organe de commande OC comprend une pièce de commande PC ayant une troisième position (illustrée sur la figure 6) provoquant son placement dans l'état ouvert et une quatrième position (illustrée sur la figure 7) provoquant son placement dans l'état fermé. Dans ce cas, et comme illustré non limitativement sur les figures 3 à 7, chaque déclencheur DOj comprend un élément EDj qui est translatable (flèche F3) entre ses première et deuxième positions lors d'un changement de position du volet mobile Vj associé afin de faire passer la pièce de commande PC de sa troisième position à sa quatrième position (flèche F4), ou inversement.

On comprendra que les deux éléments EDj agissent sur la même pièce de commande PC comme illustré sur les figures 3 à 5. A cet effet, la pièce de commande PC peut être installée dans une position centrée par rapport au plan médian (vertical et longitudinal) de la console centrale CC, de sorte que l'élément droit ED1 agisse sur une première de ses sous-parties et que l'élément gauche ED2 agisse sur une seconde de ses sous-parties (éventuellement voisine de cette première sous-partie comme illustré sur les figures 3 à 5). Dans ce cas, la pièce de commande PC est agencée de manière à être dans sa quatrième position lorsque l'un des déclencheurs DOj est dans sa deuxième position, quelle que soit la position de l'autre déclencheur DOj'. Par exemple, et comme illustré non limitativement sur les figures 3 à 7, chaque élément EDj peut comprendre une première partie P1 sur laquelle agit le volet mobile Vj associé (en particulier lorsqu'il est en position fermée), et une seconde partie P2 prolongeant la première partie P1 et propre à agir sur la pièce de commande PC. Dans l'exemple illustré, la seconde partie P2 d'un élément EDj prolonge transversalement sa première partie P1 en direction de la pièce de commande PC et de la seconde partie P2 de l'autre élément EDj'. Egalement par exemple, et comme illustré non limitativement sur les figures 6 et 7, la pièce de commande PC peut se présenter sous la forme d'une lame (ou tige) rigide (non déformable), ayant une extrémité libre sur laquelle agissent les éléments EDj et présentant éventuellement une courbure. Dans cet exemple d'agencement l'élément droit ED1 agit sur une sous-partie droite de l'extrémité libre de la pièce de commande PC et l'élément gauche ED2 agit sur une sous-partie gauche de l'extrémité libre de la pièce de commande PC, située juste à côté de cette sous-partie droite.

Egalement par exemple, et comme illustré non limitativement sur les figures 6 et 7, l'organe de commande OC peut comprendre un pion translatable PT sur lequel la pièce de commande PC exerce, dans sa quatrième position, une pression propre à provoquer l'état fermé. En d'autres termes, et comme illustré sur la figure 6, lorsque la pièce de commande PC est dans sa troisième position elle n'exerce pas de pression sur le pion translatable PT qui est alors dans une position « de repos » (ou inactive) associée à l'état ouvert. En revanche, comme illustré sur la figure 7, lorsque la pièce de commande PC est dans sa quatrième position elle exerce une pression sur le pion translatable PT qui est alors translaté dans une position « active » associée à l'état fermé.

Pour obtenir ce résultat la pièce de commande PC peut, comme illustré non limitativement sur les figures 6 et 7, être montée à rotation de sorte que la translation (ici vers le haut (flèche F3)) d'un élément EDj (du fait de l'ouverture du volet mobile Vj associé) provoque son entraînement en rotation (ici vers le haut (flèche F4)).

Mais dans une variante de réalisation la pièce de commande PC pourrait être montée en translation, et dans ce cas le déplacement d'un élément EDj (par translation) provoquerait sa translation et donc la translation du pion translatable PT.

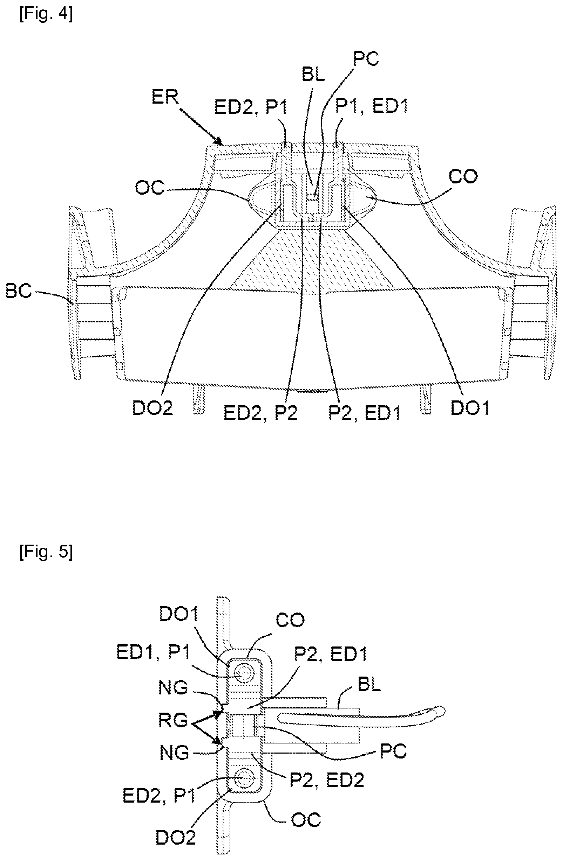

Egalement par exemple, et comme illustré non limitativement sur les figures 5 à 7, l'organe de commande OC peut comprendre un corps CO comportant les déclencheurs DOj et un bloc de commande BL comprenant un circuit électronique comportant le pion translatable PT et couplé au dispositif d'éclairage interne. Dans ce cas, c'est ce circuit électronique qui a l'état ouvert lorsque son pion translatable PT est dans sa position de repos (non translatée - figure 6) et l'état fermé lorsque son pion translatable PT est dans sa position active (translatée - figure 7). Dans l'exemple illustré non limitativement sur les figures 6 et 7, la pièce de commande PC est montée à rotation sur le bloc de commande BL, par exemple sur la paroi qui est traversée par le pion translatable PT. Mais dans une variante de réalisation elle pourrait être montée à rotation sur le corps CO.

On notera également que dans l'exemple illustré non limitativement sur les figures 2 à 7, le corps CO comprend deux logements ouverts dans lesquels respectivement les déclencheurs DOj se déplacent (par translation).

On notera également, comme illustré non limitativement sur la figure 5, que le corps CO peut comprendre deux rainures de guidage RG linéaires et communiquant respectivement avec ses deux logements ouverts, et les deux éléments EDj peuvent comprendre respectivement deux nervures de guidage NG linéaires et logées respectivement dans les deux rainures de guidage RG pour guider leur translation. Cela permet d'empêcher les déplacements transversaux des deux éléments EDj qui pourraient perturber le fonctionnement de l'organe de commande OC. Un agencement inverse est aussi envisageable (à savoir deux éléments EDj comprenant respectivement deux rainures de guidage linéaires et un corps CO comprenant deux nervures de guidage linéaires et logées respectivement dans les deux rainures de guidage).

On notera également, comme illustré non limitativement sur les figures 6 et 7, que chacun des déclencheurs DOj peut être avantageusement installé dans le corps CO avec une force de renvoi qui est propre à le pousser automatiquement de sa première position (figure 6) vers sa deuxième position (figure 7) lorsque le volet mobile Vj associé passe de sa position fermée à sa position ouverte.

Par exemple, et comme illustré non limitativement sur les figures 6 et 7, les deux forces de renvoi peuvent être assurées par deux ressorts (ou lames) de renvoi RR qui sont installé(e)s respectivement dans les deux logements ouverts du corps CO sous les déclencheurs DOj. On comprendra que lorsqu'un volet mobile Vj est dans sa position fermée il maintient le déclencheur DOj associé dans sa première position (la plus basse), ce qui comprime le ressort de renvoi RR, tandis que lorsqu'un volet mobile Vj s'ouvre la position du déclencheur DOj associé n'est plus bloquée et donc le ressort de renvoi RR translate automatiquement ce dernier (DOj) vers le haut (et donc vers sa deuxième position) et se retrouve peu ou pas comprimé.

## Revendications

1. Console centrale (CC) destinée à équiper un véhicule et comprenant un boîtier (BC) comportant un espace de rangement (ER) à accès contrôlé par deux volets mobiles (Vj) ayant chacun des positions fermée et ouverte, **caractérisé en ce que** l'espace de rangement (ER) est associé à un dispositif d'éclairage interne ayant des états éteint et allumé commandés respectivement par des états ouvert et fermé d'un organe de commande (OC), ledit organe de commande (OC) comprenant deux déclencheurs (DOj), associés respectivement auxdits volets mobiles (Vj), et propres chacun à être placés indépendamment dans une première position induisant ledit état ouvert ou une deuxième position induisant ledit état fermé selon que ledit volet mobile (Vj) associé est en position fermée ou ouverte, et **en ce que** ledit organe de commande (OC) comprend une pièce de commande (PC) ayant des troisième et quatrième positions provoquant respectivement lesdits états ouvert et fermé, chaque déclencheur (DOj) comprenant un élément (EDj) translatable entre ses première et deuxième positions lors d'un changement de position dudit volet mobile (Vj) associé afin de faire passer ladite pièce de commande (PC) de sa troisième position à sa quatrième position, ou inversement, chacun des éléments (EDj) agissant sur la même pièce de commande (PC).

2. Console centrale selon la revendication précédente, **caractérisée en ce que** ladite pièce de commande (PC) est dans sa quatrième position lorsque l'un desdits déclencheurs (DOj) est dans sa deuxième position, quelle que soit la position de l'autre déclencheur (DOj).

3. Console centrale selon l'une des revendications précédentes, **caractérisée en ce que** ledit organe de commande (OC) comprend un pion translatable (PT) sur lequel ladite pièce de commande (PC) exerce, dans sa quatrième position, une pression propre à provoquer ledit état fermé.

4. Console centrale selon la revendication précédente, **caractérisée en ce que** ladite pièce de commande (PC) est montée à rotation et propre à exercer ladite pression lorsqu'elle est entraînée en rotation de sa troisième position vers sa quatrième position par l'un desdits éléments (EDj).

5. Console centrale selon la revendication 3 ou 4, **caractérisée en ce que** ledit organe de commande (OC) comprend un corps (CO) comportant lesdits déclencheurs (DOj) et un bloc de commande (BL) comprenant un circuit électronique comportant ledit pion translatable (PT), ayant lesdits états ouvert et fermé et couplé audit dispositif d'éclairage interne.

6. Console centrale selon la revendication précédente, **caractérisée en ce que** chacun desdits déclencheurs (DOj) est installé dans ledit corps (CO) avec une force de renvoi propre à le pousser automatiquement de sa première position vers sa deuxième position lorsque ledit volet mobile (Vj) associé passe de sa position fermée à sa position ouverte.

7. Console centrale selon l'une des revendications précédentes, **caractérisée en ce que** chaque élément (EDj) comprend une première partie (P1) sur laquelle agit ledit volet mobile (Vj) associé, et une seconde partie (P2) prolongeant ladite première partie (P1) et propre à agir sur ladite pièce de commande (PC).

8. Console centrale selon l'une des revendications précédente, **caractérisée en ce que** chacun desdits volets mobiles (Vj) est monté à rotation par rapport audit boîtier (BC).

9. Véhicule, **caractérisé en ce qu'**il comprend en outre au moins une console centrale (CC) selon l'une des revendications précédentes.

## Patentansprüche

1. Mittelkonsole (CC) zur Ausstattung eines Fahrzeugs und mit einem Gehäuse (BC), das einen Aufbewahrungsraum (ER) mit kontrolliertem Zugang durch zwei bewegliche Klappen (Vj) aufweist, von denen jede eine geschlossene und eine offene Stellung aufweist, **dadurch gekennzeichnet, dass** der Aufbewahrungsraum (ER) einer internen Beleuchtungsvorrichtung zugeordnet ist, die aus- und eingeschaltete Zustände aufweist, die jeweils durch die offenen und geschlossenen Zustände eines Steuerelements (OC) gesteuert werden, wobei das Steuerelement (OC) zwei Auslöser (DOj) aufweist, die jeweils den beweglichen Klappen (Vj) zugeordnet sind und jeweils dazu geeignet sind, unabhängig in eine erste Stellung versetzt zu werden, die den offenen oder einen zweiten Zustand verursacht Die den geschlossenen Zustand induzierende Stellung, wobei sich die zugehörige bewegliche Klappe (Vj) in der geschlossenen oder offenen Stellung befindet, und wobei das Steuerorgan (OC) ein Steuerteil (PC) mit einer dritten und vierten Stellung umfasst, die jeweils den offenen und den geschlossenen Zustand verursachen, wobei jeder Auslöser (DOj) ein Element (EDj) umfasst, das zwischen seiner ersten und seiner zweiten Stellung bei einer Positionsänderung der zugeordneten beweglichen Klappe (Vj) verschiebbar ist, um das Steuerteil (PC) von seiner dritten Stellung in seine vierte Stellung oder umgekehrt zu bewegen, wobei jedes der Elemente (EDj) auf dasselbe Steuerteil (PC) einwirkt.

2. Mittelkonsole nach dem vorhergehenden Anspruch, **dadurch gekennzeichnet, dass** sich das Steuerteil (PC) in seiner vierten Position befindet, wenn sich einer der Auslöser (DOj) in seiner zweiten Position befindet, unabhängig von der Position des anderen Auslösers (DOj).

3. Mittelkonsole nach einem der vorhergehenden, **dadurch gekennzeichnet, dass** das Steuerorgan (OC) einen verschiebbaren Zapfen (PT) aufweist, auf den das Steuerteil (PC) in seiner vierten Stellung einen Druck ausübt, der geeignet ist, den geschlossenen Zustand zu bewirken.

4. Mittelkonsole nach dem vorhergehenden **dadurch gekennzeichnet, dass** das Steuerteil (PC) drehbar gelagert ist und den Druck ausüben kann, wenn es von einem der Elemente (EDj) aus seiner dritten Position in seine vierte Position gedreht wird.

5. Mittelkonsole nach Anspruch 3 oder 4, **dadurch gekennzeichnet, dass** das Steuerorgan (OC) einen Körper (CO) mit den Auslösern (DOj) und einen Steuerblock (BL) mit einer elektronischen Schaltung mit dem verschiebbaren Stift (PT) aufweist, der die Zustände offen und geschlossen aufweist und mit der inneren Beleuchtungsvorrichtung gekoppelt ist.

6. Mittelkonsole nach dem vorhergehenden **dadurch gekennzeichnet, dass** jeder der Auslöser (DOj) in dem Körper (CO) mit einer Rückstellkraft installiert ist, die ihn automatisch aus seiner ersten Position in seine zweite Position drücken kann, wenn die zugehörige bewegliche Klappe (Vj) aus ihrer geschlossenen Position in ihre offene Position bewegt wird.

7. Mittelkonsole nach einem der vorhergehenden, **dadurch gekennzeichnet, dass** jedes Element (EDj) einen ersten Teil (P1), auf den die zugeordnete bewegliche Klappe (Vj) wirkt, und einen zweiten Teil (P2) aufweist, der den ersten Teil (P1) verlängert und geeignet ist, auf das Steuerteil (PC) einzuwirken.

8. Mittelkonsole nach einem der vorhergehenden, dadurch gekennzechnet, dass jede der beweglichen Klappen (Vj) in Bezug auf das Gehäuse (BC) drehbar angebracht ist.

9. Fahrzeug, **dadurch gekennzeichnet, dass** es außerdem mindestens eine zentrale Konsole (CC) nach einem der vorhergehenden Ansprüche umfasst.

## Claims

1. Centre console (CC) intended to equip a vehicle and comprising a housing (BC) comprising a stowage space (ER) with on dock access by two movable flaps (Vj) each having positions that are closed and open, wherein the stowage space (ER) is associated with an internal lighting device having statuses that are switched off and on order despatched to supplier respectively by statuses that are open and closed from a control member (OC), said control member (OC) comprising two trip devices (DOj), respectively associated with said movable flaps (Vj), and each capable of being placed independently in a first position inducing said control member open status or a second position inducing said closed status depending on whether said associated mobile flap (Vj) is in a closed or open position, and in that said control member (OC) comprises a component purchase order (PC) having third and fourth positions respectively causing said open and closed statuses, each trip device (DOj) comprising an item (EDj) that can be translated between its first and second positions when said associated mobile flap (Vj) changes position in order to cause said component purchase order (PC) to pass from its third position to its fourth position, or vice versa, each of the items (EDj) acting on the same component of order (PC).

2. Centre console according to the previous claim, wherein said order component (PC) is in its fourth position when one of said triggers (DOj) is in its second position, whatever the position of the other trigger (DOj).

3. A centre console according to any one of the previous claims, wherein said control member comprises a translatable pin (PT) on which said order component (PC) exerts, in its fourth position, a pressure capable of causing said closed status.

4. Centre bracket according to the previous claim, wherein said order component (PC) is mounted to rotate and capable of exerting said pressure when it is driven in rotation from its third position to its fourth position by one of said items (EDj).

5. A centre console according to claim 3 or 4, wherein said control member comprises a body comprising said trip devices and a order unit comprising an electronic circuit comprising said translatable pin having said statuses CO and locked and coupled to said internal lighting device.

6. The central console according to claim 1, wherein each of said trip devices is installed in said body with a return force adapted to push it automatically from its first position to its second position when said associated movable flap (Vj) passes from its closed position to its open position.

7. Centre console according to one of the previous claims, wherein each item (EDj) comprises a first part (P1) on which said associated mobile flap (Vj) acts, and a second part (P2) extending said first part (P1) and adapted to act on said order component (PC).

8. Centre bracket according to one of the previous claims, wherein each of said movable flaps (Vj) is mounted to rotate by report to said housing (BC).

9. Vehicle, further comprising at least one centre console (CC) according to any one of the previous claims.
